(19) **Europäisches Patentamt / European Patent Office / Office européen des brevets**

(11) **EP 4 598 184 A1**

(12) **EUROPEAN PATENT APPLICATION**
published in accordance with Art. 153(4) EPC

(43) Date of publication:
06.08.2025 Bulletin 2025/32

(21) Application number: 23873132.7

(22) Date of filing: 26.09.2023

(51) International Patent Classification (IPC):
$H04W\ 72/04^{(2023.01)}$    $H04W\ 72/53^{(2023.01)}$
$H04W\ 72/232^{(2023.01)}$    $H04L\ 5/00^{(2006.01)}$
$H04W\ 72/0457^{(2023.01)}$

(52) Cooperative Patent Classification (CPC):
H04L 5/00; H04W 72/04; H04W 72/0457;
H04W 72/232; H04W 72/53

(86) International application number:
PCT/KR2023/014870

(87) International publication number:
WO 2024/072020 (04.04.2024 Gazette 2024/14)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.09.2022 KR 20220124615
04.11.2022 KR 20220146492
16.02.2023 KR 20230021074

(71) Applicant: **LG Electronics Inc.**
**Yeongdeungpo-gu**
**Seoul 07336 (KR)**

(72) Inventors:
• **AHN, Seungjin**
Seoul 06772 (KR)
• **KIM, Jaehyung**
Seoul 06772 (KR)
• **YANG, Suckchel**
Seoul 06772 (KR)
• **LEE, Youngdae**
Seoul 06772 (KR)
• **KIM, Seonwook**
Seoul 06772 (KR)

(74) Representative: **Plasseraud IP**
**104 Rue de Richelieu**
**CS92104**
**75080 Paris Cedex 02 (FR)**

(54) **APPARATUS AND METHOD FOR ALLOCATING FREQUENCY DOMAIN RESOURCES IN WIRELESS COMMUNICATION SYSTEM**

(57) In order to allocate frequency domain resources in a wireless communication system, a method of operating a terminal in a wireless communication system may comprise receiving configuration information related to resource allocation, receiving control information related to the resource allocation, identifying allocated resources based on at least one of the configuration information or the control information, and transmitting or receiving a signal through the resources.

```
            ┌─ START ─┐
                 │
                 ▼           S1101
  ┌──────────────────────────────┐
  │ RECEIVE CONFIGURATION INFORMATION │
  │   RELATED TO RESOURCE ALLOCATION  │
  └──────────────────────────────┘
                 │
                 ▼           S1103
  ┌──────────────────────────────┐
  │   RECEIVE CONTROL INFORMATION    │
  │   RELATED TO RESOURCE ALLOCATION  │
  └──────────────────────────────┘
                 │
                 ▼           S1105
  ┌──────────────────────────────┐
  │    IDENTIFY ALLOCATED RESOURCES   │
  │ BASED ON CONFIGURATION INFORMATION │
  │      AND CONTROL INFORMATION      │
  └──────────────────────────────┘
                 │
                 ▼           S1107
  ┌──────────────────────────────┐
  │     TRANSMIT OR RECEIVE DATA     │
  │   THROUGH ALLOCATED RESOURCES    │
  └──────────────────────────────┘
                 │
                 ▼
            ┌─ END ─┐
```

**FIG. 11**

EP 4 598 184 A1

**Description**

SPECIFICATIONS

Technical Field

The following description relates to a wireless communication system, and to a device and method for allocating frequency domain resources in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure can provide a device and method for more effectively allocating resources in a wireless communication system.

The present disclosure can provide a device and method for effectively expressing allocation information for resources in a frequency domain in a wireless communication system.

The present disclosure can provide a device and method for expressing resources allocated to a channel that uses a bandwidth with a limited size in a wireless communication system using a field designed for a wider bandwidth.

The present disclosure can provide a device and method for optimizing a frequency domain resource allocation (FDRA) field for a channel with a narrow bandwidth in a wireless communication system.

The present disclosure can provide a device and method for determining an RBG (resource block group) size related to an FDRA field in a wireless communication system.

The present disclosure can provide a device and method for signaling information related to an RBG size applied to resource allocation in a wireless communication system.

The present disclosure can provide a device and method for adaptively adjusting an RBG size corresponding to bits included in an FDRA field in a wireless communication system.

The present disclosure can provide a device and method for imposing constraints on an FDRA field for resource allocation within a narrow bandwidth in a wireless communication system.

The present disclosure can provide a device and method for performing transmission in an unlicensed band within a narrow bandwidth in a wireless communication system.

The present disclosure can provide a device and method for performing frequency hopping in consideration of a narrow bandwidth in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method of operating a terminal in a wireless communication system may comprise receiving configuration information related to resource allocation, receiving control information related to the resource allocation, identifying allocated resources based on at least one of the configuration information or the control information, and transmitting or receiving a signal through the resources. The resources may be identified based on at least one table defining a plurality of resource block group (RBG) sizes per bandwidth part (BWP) size, and each of the plurality of BWP sizes may correspond to at least one RBG size value for allocation of a relatively wide bandwidth and at least one RBG size value for allocation of a relatively narrow bandwidth.

As an example of the present disclosure, a terminal in a wireless communication system may comprise a transceiver and a processor connected to the transceiver. The processor may receive configuration information related to resource allocation, receive control information related to the resource allocation, identify allocated resources based on at least one of the configuration information or the control information and transmit or receive a signal through the resources. The resources may be identified based on at least one table defining a plurality of resource block group (RBG) sizes per bandwidth part (BWP) size, and each of the plurality of BWP sizes may correspond to at least one RBG size value for allocation of a relatively wide bandwidth and at least one RBG size value for allocation of a relatively narrow bandwidth.

As an example of the present disclosure, a communication device may comprise at least one processor and at least one computer memory connected to the at least one processor and configured to store instructions that direct operations as executed by the at least one processor. The operations may comprise receiving configuration information related to resource allocation, receiving control information related to the resource allocation, identifying allocated resources based on at least one of the configuration information or the control information, and transmitting or receiving a signal through the resources. The resources may be identified based on at least one table defining a plurality of resource block group (RBG) sizes per bandwidth part (BWP) size, and each of the plurality of BWP sizes may correspond to at least one RBG size value for allocation of a relatively wide bandwidth and at least one RBG size value for allocation of a relatively narrow bandwidth.

As an example of the present disclosure, a non-transitory computer-readable medium storing at least one instructions may comprise the at least one instructions executable by a processor. The at least one instruction may control a device to receive configuration information related to resource allocation, receive control information related to the resource allocation, identify allocated resources based on at least one of the configuration information or the control information, and transmit or receive a signal through the resources. The resources may be identified based on at least one table defining a plurality of resource block group (RBG) sizes per bandwidth part (BWP) size, and each of the plurality of BWP sizes may correspond to at least one RBG size value for allocation of a relatively wide bandwidth and at least one RBG size value for allocation of a relatively narrow bandwidth.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, hardware costs can be reduced by saving buffers.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates an example of PRB (physical resource block) allocation per RBG (resource block group) according to RA (resource allocation) type 0 applicable to the present disclosure.

FIG. 9 illustrates an example of PRB allocation according to RA type 1 applicable to the present disclosure.

FIG. 10 illustrates an example of frequency hopping applicable to the present disclosure.

FIG. 11 illustrates an example of a procedure for transmitting or receiving data in a wireless communication system according to an embodiment of the present disclosure.

FIG. 12 illustrates an example of a procedure for performing communication based on an adjusted RBG size in a wireless communication system according to an embodiment of the present disclosure.

FIG. 13 illustrates an example of a procedure for processing a data signal based on a limited bandwidth in a wireless communication system according to an embodiment of the present disclosure.

FIG. 14 illustrates an example of a procedure for applying multiple RBG sizes to a frequency domain resource allocation (FDRA) field in a wireless communication system according to an embodiment of the present disclosure.

FIG. 15a and FIG. 15b illustrate examples of interlaced transmission applicable to the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

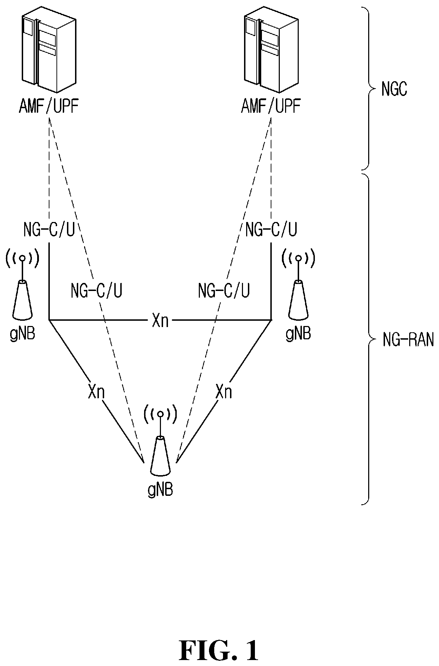

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

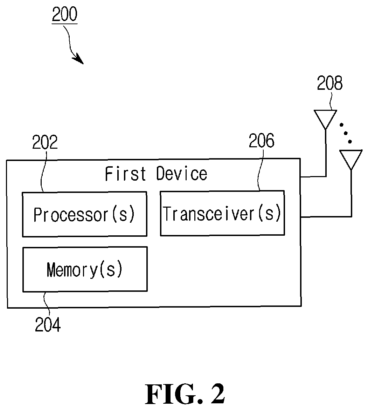

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

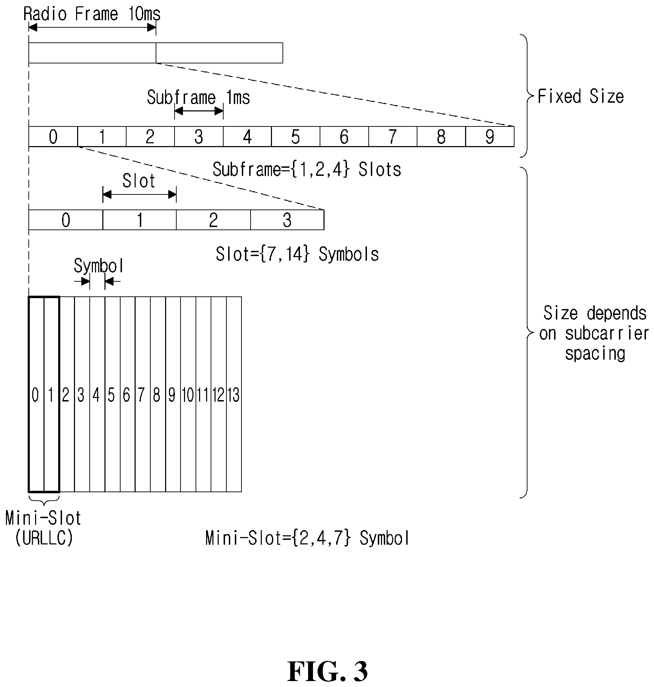

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a denseurban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = 1/(\Delta f_{max} \cdot N_f/100)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA})T_c$ than a corresponding downlink frame in a corresponding terminal starts. For a subcarrier spacing configuration $\mu$, slots are numbered in an increasing order of $n_s^\mu \in \{0, \cdots, N_{slot}^{subframe,\mu} - 1\}$ in a subframe and are numbered in an increasing order of $n_{s,f}^\mu \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ( $N_{symb}^{slot}$ ), the number of slots per radio frame ( $N_{slot}^{frame,\mu}$ ) and the number of slots per subframe ( $N_{slot}^{subframe,\mu}$ ) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

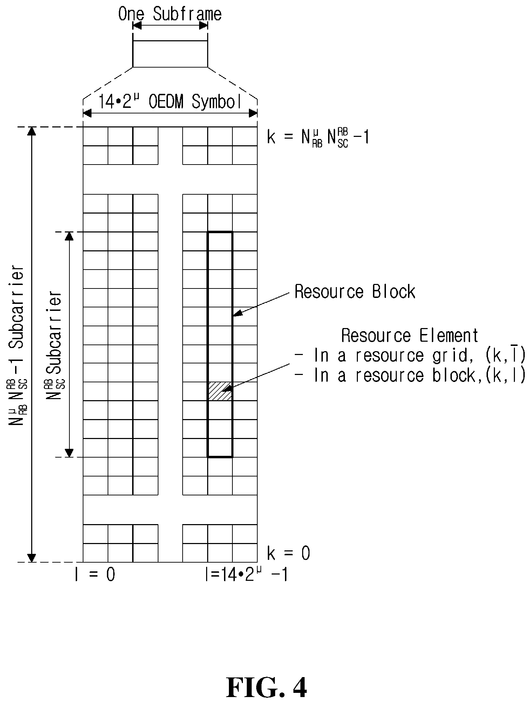

FIG. 4 exemplifies a resource grid in a wireless communication system to which the present disclosure may be applied.

Referring to FIG. 4, as an illustrative description, a resource grid is configured with $N_{RB}^{\mu}N_{SC}^{RB}$ subcarriers in a frequency domain, and one subframe is configured with $14\cdot2^{\mu}$ OFDM symbols, but the resource grid and the subframe are not limited thereto. In an NR system, a transmitted signal is described by one or more resource grids configured with $2^{\mu}N_{symb}^{(\mu)}$ OFDM symbols and $N_{RB}^{\mu}N_{SC}^{RB}$ subcarriers. Here, $N_{RB}^{\mu}\leq N_{RB}^{max,u}$ . The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k=0,\ldots,N_{RB}^{\mu}N_{SC}^{RB}-1$ is an index in a frequency domain and $l'=0,\ldots,2^{\mu}N_{symb}^{(\mu)}-1$ refers to a position of a symbol in a subframe. When referring to a resource element in a slot, an index pair (k, 1) is used. Here, $l = 0, \ldots, 2^{\mu} N_{symb}^{(\mu)} - 1$. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB} = 12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier spacing configuration $\mu$ in a frequency domain is given as in the following Equation 1.

[Equation 1]

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

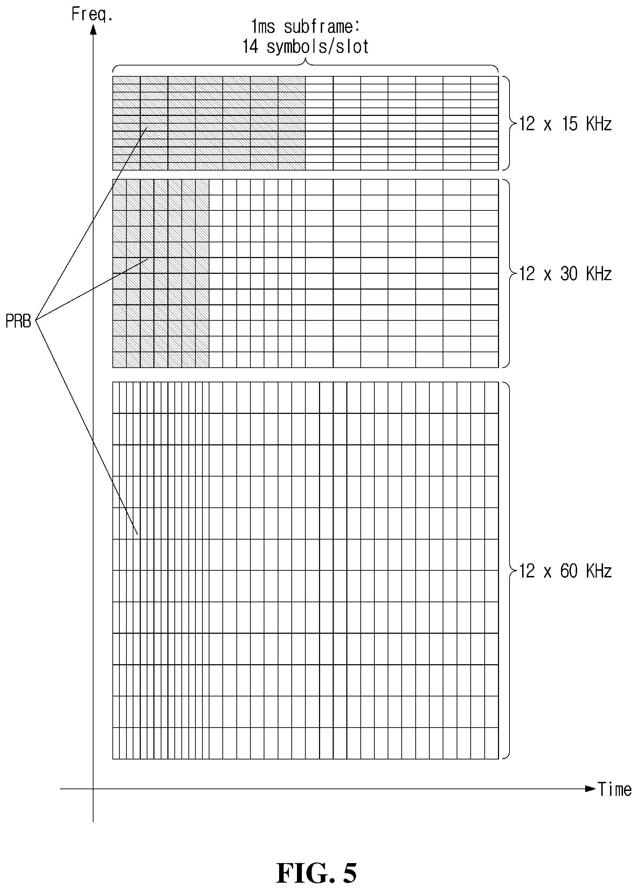

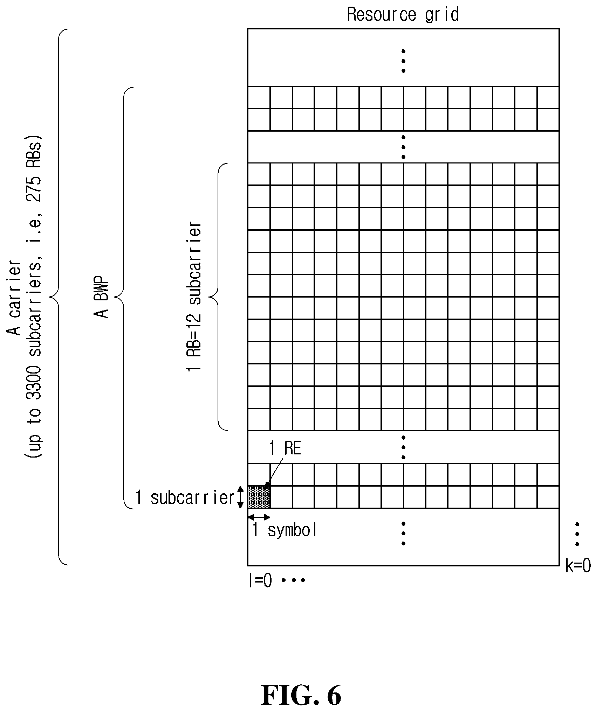

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

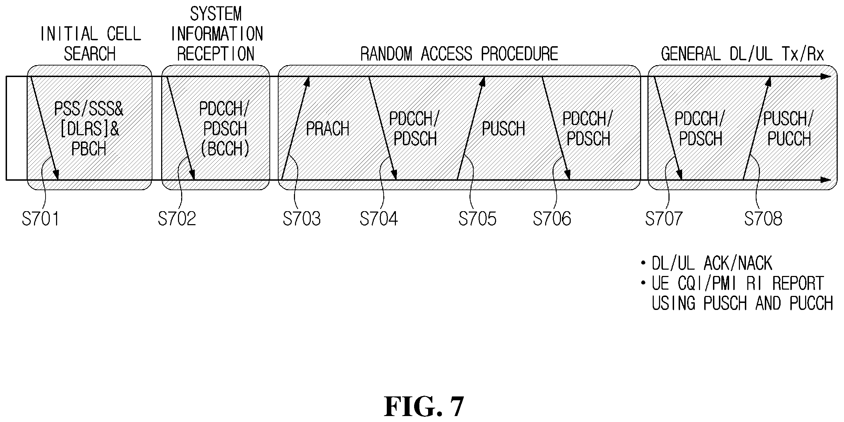

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Specific embodiments of the present disclosure

The present disclosure relates to allocation of frequency domain resources in a wireless communication system, and more specifically, to a technique for allocating resources to a channel using a limited bandwidth and indicating the allocated resources. Specifically, the present disclosure presents various embodiments for expressing allocated resources for a channel having a narrow bandwidth using a frequency domain resource allocation (FDRA) field designed based on a relatively wider bandwidth.

5G NR is a technology that mainly provides services through three main technologies: eMBB (Enhanced Mobile Broadband), URLLC, and mIoT (Massive IoT: Internet of Things). In the case of mIoT, rather than a technology direction that requires high-performance maximum throughput (max T-put) speed transmission such as CA (carrier aggregation), it can be thought of as a terminal device form that optimizes power consumption based on small size and low power. Then, not only the three main technologies of URLLC, eMBB, and mIoT exist in 5G NR, but a hybrid form of the three technologies is also possible. In 3GPP Release-17, by targeting smart factory applications or wearable devices to some extent, a new device type that requires low power while requiring URLLC or a certain level of speed may be needed. Devices of this type are referred to as reduced capability terminals, i.e., Redcap (reduced capability) UEs or Redcap terminals.

For frequency resources, the Redcap UE uses a narrow spectrum or bandwidth (BW) that is different from the existing one. Specifically, the Redcap UE uses up to 20MHz or 5MHz BW instead of the existing 100MHz BW, in which case power consumption and cost savings may occur. The present disclosure proposes a technology for setting and operating only a PxSCH channel with 5MHz BW in a Redcap terminal using 20MHz BW in 3GPP Release 17. The UE according to the proposed technology may be understood as a new type of Redcap based on simple changes rather than many changes compared to the existing Redcap using 20MHz BW. In this case, optimization is required for the PxSCH channel, and at this time, various embodiments will be described so that the allocation of the PxSCH channel can be operated only with 5MHz BW and the corresponding T-put.

The present disclosure relates to a terminal using a narrow bandwidth, and proposes a technique of using a maximum 5MHz BWP only for a PxSCH channel in a terminal using a maximum 20MHz BWP instead of using a maximum 100MHz BWP as the overall channel BW used by a general device. In this case, there may be no change to the control channels (e.g., PDCCH, PUCCH, SRS, PRACH) from the existing L1 perspective, and the BW or BWP will be maintained at a maximum of 5MHz for the purpose of reducing T-put or buffer for the PDSCH of downlink and the PUSCH of uplink.

For this purpose, although the base station may allocate 5MHz of resources using FDRA, a method of pre-setting the range of contiguous RBs in a form similar to BWP and allocating PxSCH (e.g., PDSCH, PUSCH) within the range may be considered. In this case, a rule is required for how the FDRA indicating the PxSCH will indicate within a new set of contiguous RBs, and specifically, a method is required for frequency hopping, the start number of the RB, and the RB BW indicating the size. In addition, an alternative is also required for problems that occur when allocating PxSCH within 5MHz by indicating the RB start and RB BW while following the existing allocation method of the FDRA without pre-setting the range of RBs.

If all channels of the Redcap terminal are operated within a BWP of 20MHz, it may be possible to apply the method of allocating up to 100MHz within the BWP without much difference from the existing method for FDRA allocation. However, if only specific channels are limited to a 5MHz range in a device using a BWP of up to 20MHz, a method different from the existing resource allocation may be required. Since only specific channels are limited to a 5MHz range, additional changes may be required in frequency hopping, etc.

FDRA is defined as two types: RA (resource allocation) type 0 and RA type 1. Type 0 is a method of grouping RBs and indicating whether each RBG is used in the frequency domain. Type 1 is a method of specifying the start RB index and the length of BW using a special equation using a RIV (resource indication value).

RA type 0 is also called bitmap method, and is a method that indicates whether to use REGs by using each bit of the bitmap. Referring to TS 38.213, the size of RBGs is determined according to the BW of BWP, and the bit value '1' indicates that the RBG is allocated, and '0' indicates that the RBG is not allocated. [Table 5] below shows the definition of RBG sizes according to the size of BWP.

[Table 5]

| BWP size | configuration 1 | configuration 1 |
|----------|-----------------|-----------------|
| 1-36 | 2 | 4 |
| 37-72 | 4 | 8 |
| 73-144 | 8 | 16 |
| 145-275 | 16 | 16 |

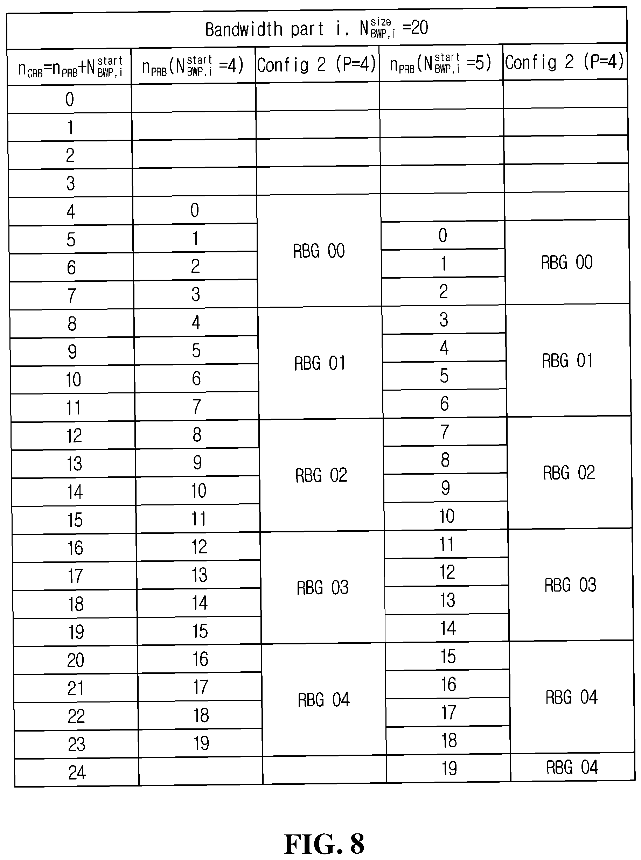

Referring to [Table 5], if the size of BWP is 50 RBs, the size of RBG is 4 RBs. An example of RGB definition according to this may be as shown in FIG. 8. FIG. 8 illustrates an example of PRB allocation per RBG according to RA type 0 applicable to the present disclosure. FIG. 8 illustrates an example of RGB allocation of a bitmap according to RA type 0. As shown in FIG. 8, four RBs are grouped into one RGB, and the DCI indicates whether to use the RBG using the FDRA field. For example, if the value of FDRA is '0100......", this means that the second RGB is allocated and the remaining REGs are not allocated.

That is, according to RA type 0, the size of RBG is determined according to the size of BWP, and one bit in the bitmap indicates whether the RBG is allocated using the values of '1' and '0'. Depending on the size of BWP and the size of RBG, the bit size of the FDRA field of DCI may vary. For example, in the case of 15KHz SCS (subcarrier spacing) of 100MHz of FR1, the FDRA field may include up to 18 bits.

Unlike RA type 0, RA type 1 uses RIV to indicate the start index of RB and the size of how many RBs are used consecutively. The value of RIV expresses a value determined using a predefined equation in binary format. In general, the bit size of the FDRA field used in DCI may be smaller than that of the bitmap format described above. In the case of RA type 1, contiguous RBs may be allocated, or RBs may be distributed to different frequency domains as two sets for frequency diversity effect.

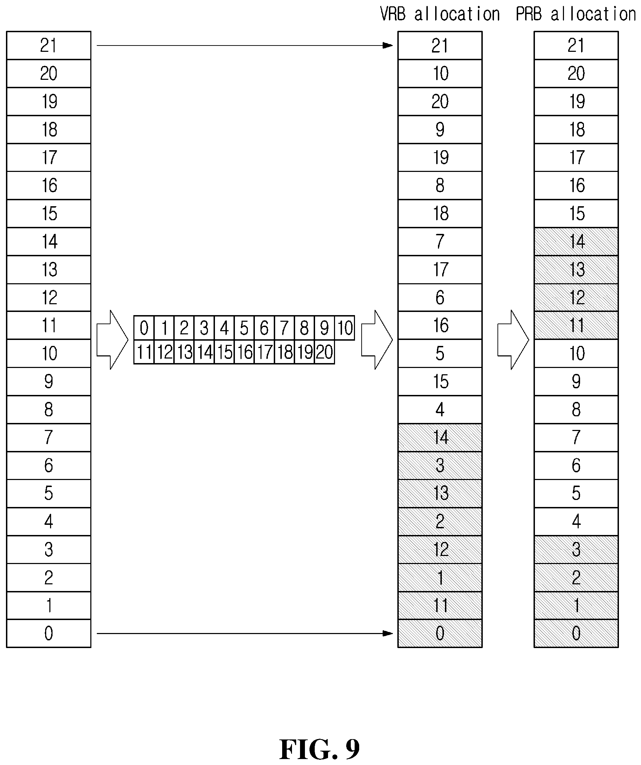

FIG. 9 illustrates an example of PRB allocation according to RA type 1 applicable to the present disclosure. FIG. 9 shows an example of the result of distributing RBs to different frequency domains in RA type 1. Referring to FIG. 9, when noninterleaved VRB-to-PRB mapping in the RIV method is the same, the leftmost RB indices are grouped into RB bundles, and indexes are assigned to the RB bundles. RBs or RB bundles are arranged using the start RB and size determined based on the calculation of RIV. The size of the RB bundle may be set to one of 1, 2, and 4 by RRC layer signaling. In this case, the RBs of the PDSCH to be actually allocated may be arranged consecutively. However, for the frequency diversity effect, it is possible to divide a bundle into two parts and disperse them from each other. This is possible when performing interleaved VRB-to-PRB mapping. [Table 6] describes the division of bundles.

[Table 6]

| |
|---|
| Interleaver matrix has 2 rows, and the number of columns is derived by the number of rows and the number of RB bundle within carrier BWP<br>• Write RB bundle on interleaver matrix column by column first<br>• Read RB bundle from interleaver matrix row by row |

Frequency hopping may be applied to PUSCH as follows. RA type 0 and RA type 1 described above are mainly applied to PDSCH of downlink. In case of RA type 0, it does not allow RBG allocation within BWP range with full flexibility per RBG unit, and under the concept of 'almost contiguous RB allocation', there is a limitation on the size of the gap part that is not allocated in the middle when allocating RBGs. This is to solve the problem that PAPR becomes an issue for power consumption in uplink. In case of RIV, interleaved VRB-to-PRB mapping is not applied to uplink. This is because if an RB or RB bundle is divided into two parts, PAPR is detrimental to performance and may become a problem for power consumption of the terminal. Therefore, in the case of PUSCH, inter-slot frequency hopping or intra-slot frequency hopping may be applied to provide frequency diversity effect while reducing PAPR.

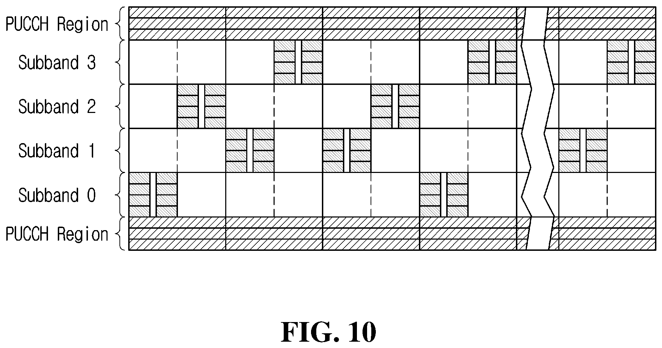

FIG. 10 illustrates an example of frequency hopping applicable to the present disclosure. FIG. 10 illustrates inter-slot or intra-slot frequency hopping of a PUSCH. FIG. 10 illustrates intra-slot frequency hopping and inter-slot frequency hopping. Hopping is not applied to the downlink, but hopping is applied to the uplink, thereby obtaining performance improvement in terms of frequency diversity. That is, the application of RA types in the downlink is restricted by PAPR.

The present disclosure describes various embodiments of how the aforementioned RA type 0, RA type 1, frequency hopping of uplink, etc. may be efficiently applied and/or operated when the band of a shared channel such as PxSCH is limited to 5 MHz. That is, the present disclosure describes various embodiments for directing resource allocation for a shared channel when a shared channel limited to a certain size is used.

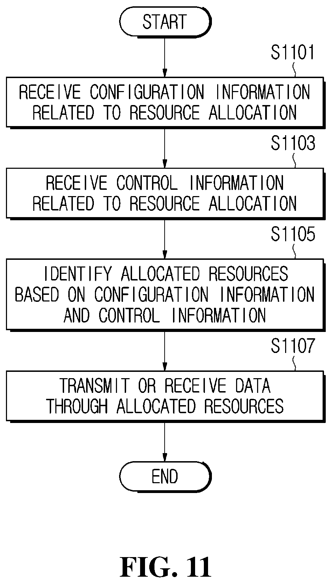

FIG. 11 illustrates an example of a procedure for transmitting or receiving data in a wireless communication system according to an embodiment of the present disclosure. FIG. 11 illustrates a method of operating a terminal.

Referring to FIG. 11, in step S1101, the terminal receives configuration information related to resource allocation. The configuration information related to resource allocation may include information related to interpretation of resource allocation information. According to various embodiments, the configuration information may include information related to interpretation of an FDRA field included in DCI. For example, the configuration information may include configuration information for interpreting the size of an RBG corresponding to each bit of a bitmap included in the FDRA field.

In step S1103, the terminal receives control information for resource allocation. The control information includes DCI, and the DCI may include scheduling information for PDSCH or PUSCH. Here, the scheduling information includes information on allocated frequency resources. At this time, the frequency resources may be allocated with a bandwidth of 5 MHz or less. For example, the frequency resources may be indicated by the FDRA field included in the DCI.

In step S1105, the terminal identifies the allocated resources based on at least one of the configuration information and or control information. The terminal identifies the location of the resources allocated for the channel (e.g., PDSCH or PUSCH) by interpreting the DCI. At this time, the terminal may interpret the DCI based on the information indicated by the configuration information and the predefined information (e.g., RBG size table).

In step S1107, the terminal transmits or receives data through the allocated resources. The terminal may identify the frequency resources and/or time resources indicated by the control information, and transmit or receive a signal through the identified resources. That is, during transmission, the terminal may generate a signal by performing processing such as encoding or modulation on data, and transmit the signal after mapping it to the allocated resources. During reception, the terminal may reconstruct the data by demapping the signal from the allocated resources, and then performing processing such as demodulation or decoding on the demapped signal.

Embodiment #1: A size different from the existing RBG size in RA type 0 of FDRA is defined.

In the case of a bitmap method such as RA type 0, the RBG size may be defined according to the number of RBs in the BWP defined in [Table 5]. In this case, if all channels (e.g., PDSCH, PUSCH, PUCCH, PDCCH, SRS, etc.) are included in the BWP, a bitmap may be generated based on 20 MHz. However, if only PxSCH (e.g., PDSCH, PUSCH) is operated with a bandwidth or band size of 5 MHz according to various embodiments of the present disclosure, the granularity of the allocation of the RBG may be set too roughly, that is, largely, which may reduce the efficiency of frequency use. That is, from the perspective of frequency diversity or frequency efficiency, it is not desirable to use a large granularity. For example, a BWP of 20 MHz uses 8 RBs as the RBG size. However, 5MHz BWP uses 2 RBs as RBG size, and in this case, when applying PxSCH for 5MHz, using 2 RBs has high flexibility in the resource allocation process. Therefore, for a device using PxSCH with an RB size of 5MHz, when using FDRA according to RA type 0, according to one embodiment of the present disclosure, the base station and the terminal apply a new RBG size rather than the RBG size of the existing RA type 0.

-    Embodiment #1-1: A new table may be applied to the RBG size of PxSCH, which are different from the table defined in the existing TS 38.213 or which has modified the existing TS 38.213 table. For example, the new table may include an RBG size smaller than the RBG size defined in the existing table (e.g., 1/n of the existing RBG size). Specifically, the table is identified based on a table defining a plurality of RBG sizes by BWP size, and each of the plurality of BWP sizes corresponds to at least one RBG size value for allocation of a relatively wide bandwidth and at least one RBG size value for allocation of a relatively narrow bandwidth. Furthermore, at least one BWP size may be defined to correspond to three or more RBG sizes that have a multiple relationship with each other. Here, the table may be understood as a set of a plurality of tables including the existing table and a table for a narrow bandwidth (e.g., 5 MHz).
-    Embodiment #1-2: A rule (e.g., equation) for creating a new RBG size value based on the RBG size value of PxSCH defined in the existing TS 38.213 table may be applied. Examples of specific rules are as follows.

(1-2-1) A value obtained by dividing a value defined in the table by 4 may be applied. For example, if the RBG size in the table is 8 RBs, 2 RBs may be applied as the RBG size for PxSCH with a maximum RB size of 5 MHz
(1-2-2) A value obtained by dividing a value defined in the table by 2 may be applied. For example, if the RBG size in the table is 8 RBs, 4 RBs may be applied as the RBG size for PxSCH with a maximum RB size of 5 MHz
(1-2-3) In the above examples, the divisible value (e.g., 4, 2) may not be predefined and may be notified by the higher layer. For example, the value may be 1, in which case it may not be separately signaled by the higher layer. That is, if the divisible value is not signaled, the values defined in the table may be applied without modification.
(1-2-4) The divisible values (e.g., 4, 2) may be set differently for each RNTI or may be predefined.
(1-2-5) The starting RB starting position and band size for PxSCH may be set statically in the higher layer or dynamically indicated in the DCI.

As in Embodiment #1-2, by setting or dividing the RBG size values defined in the existing table by a predefined value, RBG size values per BWP size for a narrow bandwidth may be determined. The RBG size values per BWP size for a narrow bandwidth are not predefined in the table. However, by Embodiment #1-2 described above, a new table including RBG size values calculated from the RBG size values defined in the table is determined, and this may be understood as the creation of a new table used internally in the terminal.

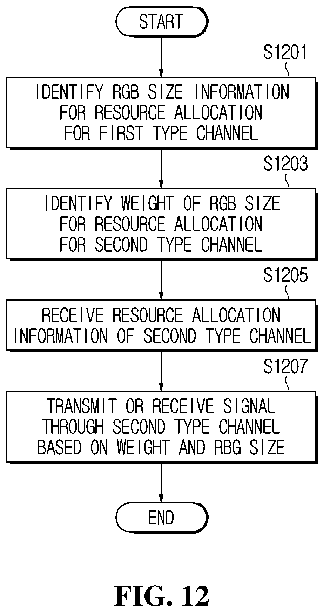

FIG. 12 illustrates an example of a procedure for performing communication based on an adjusted RBG size in a wireless communication system according to an embodiment of the present disclosure. FIG. 12 illustrates a method of operating a terminal. In the following description, a first type channel means a channel using a general bandwidth, and a second type channel means a channel using a relatively narrow bandwidth (e.g., 5 MHz).

Referring to FIG. 12, in step S1201, the terminal identifies an RBG size for resource allocation for a first type channel. For example, the terminal identifies the RBG size used for the FDRA field designed based on 20 MHz or 100 MHz. Here, the RBG size may be identified based on the BWP size. For example, the RBG size according to the BWP size is identified based on predefined mapping relationship information (e.g., table), and the mapping relationship information may define multiple options (e.g., configurations) for each of multiple BWP size sections. Here, which of the multiple options to use may be signaled in advance through configuration information or determined according to predefined rules.

In step S1203, the terminal identifies the weight of the RBG size for resource allocation for the second type channel. The RBG size identified in step S1201 is related to the allocation of the first type channel, and the RBG size for the allocation of the second type channel may be smaller than the RBG size for the allocation of the first type channel. That is, the RBG size for the allocation of the second type channel may be expressed as the product of the RBG size for the allocation of the first type channel and the weight. Accordingly, the terminal may identify the weight to be multiplied by the RBG size identified in step S1201. According to various embodiments, the weight may be predefined or may be signaled from the base station. Here, the signaling may be explicit or implicit. As the implicit signaling, the weight may be linked to another parameter. For example, the weight may be less than 1.

In step S1205, the terminal receives resource allocation information of the second type channel. The terminal may receive control information, for example DCI, including scheduling information for the second type channel. The DCI includes information indicating frequency and/or time resources allocated to the channel. For example, frequency resources may be indicated by an FDRA field.

In step S1207, the terminal transmits or receives a signal through the second type channel based on the weight and the RBG size. The terminal may identify the frequency and/or time resources allocated to the second type channel based on the resource allocation information, and transmit or receive a signal through the identified resources. At this time, according to one embodiment, the terminal may interpret the resource allocation information based on the weight identified in step S2103 and the RBG size identified in step S2301. Specifically, the terminal may determine the RBG size applied when using the second type channel based on the RBG size and the weight, and identify the allocated frequency resource (e.g., at least one RBG) by interpreting the FDRA included in the DCI based on the determined RBG size.

- Embodiment #1-3: In RA type 0, sizes different from the existing RBG size are applied

In the case of RA type 0 known as a bitmap method, the RBG size is defined according to the size of BWP as in [Table 5]. At this time, if the number of RBs of interest is expressed as maximum scheduled transmission N in the present disclosure, only the number of RBs less than or equal to N may be allocated continuously or discontinuously.

However, since the RBG size is generally allocated based on the size of the BWP, if the SCS is 15KHz and the RBG size is 16, even if the number of PRBs corresponding to the maximum scheduled allocation BW of 5MHz is 25, 16 or 32 RBs may be allocated. Considering the limitation that up to 25 RBs may be used, the bitmap method of the existing FDRA may have a problem in the maximum throughput performance. Therefore, in this case, a smaller value than the value defined in [Table 5] may be applied as the RBG size. As the RBG size decreases, a larger number of bits may be required to express the FDRA, but embodiments for resolving this will be presented below.

(1-3-1) An RGB size p may be determined by the size of BWP. If the maximum RB is applied to PxSCH, a new RGB size P' may be set by higher layer signaling.

(1-3-1-1) The P' value may be set by RRC, i.e., higher layer signaling. If the value is not signaled, the value in [Table 5] may be used.

(1-3-1-2) The P' value may be indicated through DCI. Alternatively, the values may be already set in RRC and the DCI may indicate the corresponding code point.

(1-3-1-3) The P' value may differ between BWP IDs.

(1-3-1-4) In this case, the RBG size parameter signaled by the existing Configuration 1 or Configuration 2 may be ignored.

According to the above-described embodiments, when the RBG size is set to 4, the number of REGs may increase more, for example, from 4 to 8, compared to when the previous RBG size is 16 RBs. At this time, if 6 REGs are allocated, 24 RBs are allocated, so that a number of PRBs close to 25 PRBs corresponding to the maximum scheduled transmission bandwidth (e.g., the number of PRBs corresponding to 5 MHz) may be allocated. In the above-described example, more efficient RBG allocation is possible compared to the case where the RBG size is set to 16 RBs.

(1-3-2) A scale value for the RGB size may be signaled. For example, the scale value may be set to any one of 1, 1/2, 1/4, and 1/8. The range of the scale value may vary depending on the situation. Therefore, when the REG size is selected as 16 RBs according to [Table 5], if a scale value such as 1/2, 1/4, etc. is multiplied, the RBG size may be determined to be 4 or 8.

(1-3-2-1) The scale value may be set in RRC. If the parameter for setting the scale value is not signaled, it may be interpreted as multiplying by 1 or not multiplying the scale value.

(1-3-2-2) The scale values are set in RRC, and the DCI may indicate the corresponding code point.

(1-3-2-3) The scale value may differ between BWPs, and may be separately notified for each BWP. When the scale value is signaled in RRC, 1- or 2-bit information is used, and the scale value may be indicated using one parameter per cell, which reduces signaling overhead by using bit order according to the BWP ID.

(1-3-2-4) The index of the scale value may not include 1.

(1-3-2-5) When the P value is 2, the scale value is not multiplied, and the scale value may be applied only for P values other than 2.

As in the above-described embodiments, if the RBG size is set to be smaller than the BWP size defined in [Table 5], the number of bits for expressing the FDRA may increase, i.e., the overhead of the DCI may increase. For example, in the case of 20 MHz, up to 106 RBs may be used, and according to [Table 5], since the RBG size is 8 RBs or 16 RBs, 106 RBs require 14 bits or 7 bits. In this case, assuming that the RBG size is 4 in the BWP size of the 106 RBs, up to 27 bits are required, which significantly increases the overhead.

(1-3-3) When changing the RBG size to a small size, the number of bits of FDRA is defined in advance, and RBG(s) may be allocated only up to the corresponding number of bits. The change of the RBG size may be signaled for each BWP ID. If there is no signaling for a specific BWP ID, the RBG size defined in [Table 5] is used.

(1-3-4) Embodiment #1-3 may be defined to be applied only when the RBG size is greater than or equal to a specific P or a specific K1/K2. For example, when the RBG size is 16 in 15-KHz SCS, or when the RBG size is 3 in 30-KHz SCS, Embodiment #1-3 may be applied.

- Embodiment #1-4: When the RBG size is determined according to Embodiments #1-1 and #1-2, if the number of valid RBs exceeds the maximum applicable number of PxSCH of 5 MHz, RBs may be actually allocated within the range included in the 5-MHz bandwidth during the channel coding process. For example, when the size of an RBG is 4 RBs, 7 bits are required in 15-KHz SCS as a bitmap representing the RBG. This is because, as shown in [Table 7] below, in the case of 15-KHz SCS, 25 PRBs are defined within 5-MHz BW. However, when 4 RBs configure one RBG and the value of the bit corresponding to the last RBG (e.g., the 7-th bit) is positive (e.g., 1), 3 more RBs are indicated. In other words, 3 more RBs may be allocated than the actually available RBs. At this time, a rule or instruction on how to handle the 3 more RBs that are indicated is required, and according to one embodiment, it may be handled by higher layer signaling. For example, the range from the PRB index of RGB starting with 1 from the MSB of FDRA within the BWP to the number of RBs representing up to 5 MHz may be determined as a valid range for PxSCH transmission. [Table 7] below shows the maximum number of available RBs according to BW and SCS as defined in TS 38.101-1.

[Table 7]

| SCS (kHz) | 5MHz | 10MHz | 15MHz | 20MHz | 25MHz | 30MHz | 40MHz | 50MHz | 60MHz | 80MHz | 90MHz | 100MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

(1-4-1) Since the three RBs exceed the 5-MHz channel bandwidth, the base station may adjust the TB size and apply rate matching so as not to allocate the resources in advance.

(1-4-2) Since the three RBs exceed the 5-MHz channel bandwidth, the base station may allocate up to the three RBs and puncture them so that the three RBs are not transmitted during actual transmission. In this case, since there may be performance degradation, frequency hopping may be applied in the downlink.

(1-4-3) The bandwidth of PxSCH is up to 5MHz, and a smaller band size may be applied. In this case, the rate matching and puncturing of the above-described embodiments may be applied equally.

(1-4-4) For rate matching and puncturing, the relevant operation or parameter may be pre-reconfigured in a higher layer or may be dynamically indicated in DCI.

(1-4-5) The number of RB(s) to which rate matching and puncturing are applied may be selected from a range from the RBG size minus 1 to 1. For example, if the RGB size is 4, rate matching and/or puncturing may be performed for 3, 2, or 1 RB(s).

(1-4-6) The terminal may expect puncturing for broadcast PDSCH (e.g., SIB1, OSI, RAR, MSG4, messages or channels distinguished by RNTI used for DCI reception such as all or part of paging) and rate matching for unicast PDSCH. That is, the terminal may process signals considering puncturing for channels for broadcast and rate matching for channels for unicast.

(1-4-7) When the terminal performs partial reception assuming puncturing, it may be defined in advance in the standard whether reception is required within 5 MHz in RB units or in RBG units.

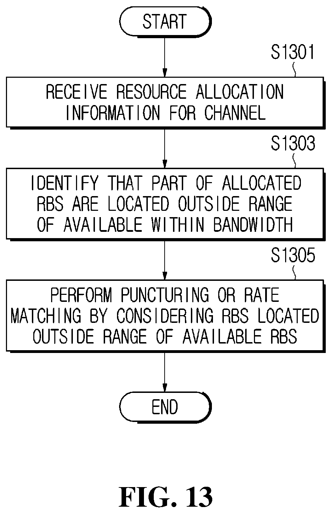

FIG. 13 illustrates an example of a procedure for processing a data signal based on a limited bandwidth in a wireless communication system according to an embodiment of the present disclosure. FIG. 13 illustrates a method of operating a terminal.

Referring to FIG. 13, in step S1301, the terminal receives resource allocation information of a channel. The terminal may receive control information including scheduling information of the channel, for example, DCI. The DCI includes information indicating frequency and/or time resources allocated to the channel. For example, the frequency resources may be indicated by an FDRA field.

In step S1303, the terminal identifies that some of the allocated RBs are located outside the range of available RBs within the bandwidth. The channel scheduled by the DCI received in step S1301 is a channel with a limited bandwidth, and the number of available RBs may also be limited according to the bandwidth limitation. However, the control information received in step S1301 may indicate RBs or REGs that are distributed more widely than the range of available RBs. In this case, the terminal may identify that some of the indicated RBs are located outside the range of available RBs.

In step S1305, the terminal performs puncturing or rate matching by considering RBs located outside the range of available RBs. That is, when transmitting or receiving data, the terminal may exclude a part of a data signal generated by considering at least one RB located outside the range of available RBs, or adjust the length of the data signal (e.g., number of symbols). At this time, configuration information or parameters for performing puncturing or rate matching may be signaled in advance.

- Embodiment #1-5: PxSCH of 5-MHz band size or less may be indicated in ascending order of PRB index starting from the bit mapped to the first RBG of the existing FDRA field, or in descending order of PRB index starting from the bit mapped to the last RBG. For example, when FDRA is "00101001000", if 5-MHz PxSCH is used, the underlined bits indicate allocation of PxSCH of up to 5MHz bandwidth size when applied. In this case, the granularity of the underlined bits may be smaller than the granularity of the non-underlined bits.

(1-5-1) FDRA may specify a bitmap for the 20-MHz range.

(1-5-2) The RBG size of the underlined part and the RBG size indicated by each bit of the remaining non-underlined part may be different from each other.

(1-5-3) When determining the range of the RB index, if it is in ascending order, the non-underlined bits from the MSB are indicated, and the non-underlined bits from the LSB may not be indicated. The RBG size indicated by the non-underlined bits and the RBG size indicated by the underlined bits may be different, and RBs may be indicated within the BW(P) range of the actually valid PxSCH.

(1-5-3-1) The RBG size corresponding to the non-underlined part may be applied as the number of RBs defined in the existing TS 38.213.

(1-5-3-2) The RBG size corresponding to the non-underlined part may be preset through upper layer signaling.

(1-5-3-3) The RBG size corresponding to the underlined part may be determined according to one of the embodiments described above.

(1-5-3-4) Among the bits included in the FDRA, several bits from the MSB are used to indicate an offset of a certain granularity, and the subsequent bits may indicate an allocation according to RA type 0 of the FDRA for up to 5 MHz. The granularity may be the number of RBs of RBG according to the size of the BWP or the number of specific RBs configured. Alternatively, the granularity may be a multiple of the RBG size.

(1-5-3-5) If the frequency domain of a specific PxSCH is determined, the non-underlined bits with a value of 0 described above may be omitted from the FDRA.

(1-5-3-6) Whether or not Embodiment #1-5 may be applied may be reported through the UE capability information.

(1-5-3-7) If the value of 1 in the bitmap is set to exceed the valid RBG range of up to 5 MHz or the valid band size of the PxSCH, the terminal performs partial reception by allocating data from the front end of the bitmap to the valid RGB and puncturing the rest.

(1-5-3-8) In the case of (1-5-3-7) described above, rate matching is also possible, which does not allocate data to the corresponding RBG instead of puncturing, and allocates only up to the valid RBG.

(1-5-3-9) For (1-5-3-7) and (1-5-3-8) described above, related higher layer signaling may be performed.

(1-5-4) In determining the range of the RB index, if it is in descending order, only the non-underlined bits from the LSB may be expressed, and the non-underlined bits from the MBS may not be expressed. The sizes of the RBGs mapped to the non-underlined bits with a value of 0 and the RBGs mapped to the underlined bits may be different, and the RBs may be indicated within the BW(P) range of the actually valid PxSCH.

(1-5-4-1) For (1-5-4) described above, (1-5-3-1) to (1-5-3-9) described above may be applied.

As described above, two or more RBG sizes may be applied to bits in the bitmap. That is, the terminal may determine a first bit set and a second bit set for bits included in the bitmap, apply a first RBG size to at least one RBG corresponding to bits belonging to the first bit set, and apply a second RBG size to at least one RBG corresponding to bits belonging to the second bit set.

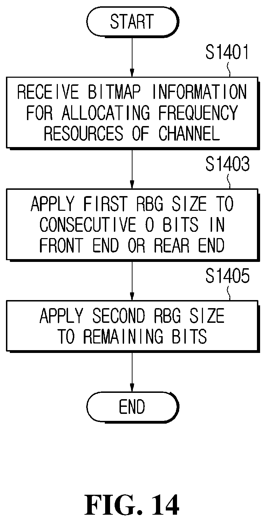

FIG. 14 illustrates an example of a procedure for applying multiple RBG sizes to an FDRA field in a wireless communication system according to an embodiment of the present disclosure. FIG. 14 illustrates a method of operating a terminal.

Referring to FIG. 14, in step S1401, the terminal receives bitmap information for allocating frequency resources of a channel. The bitmap information is included in DCI and may include FDRA. Each bit of the bitmap information corresponds to one RBG, and a bit set to 0 (e.g., '0 bit' hereinafter) means non-allocation of RBG corresponding to the bit, and a bit set to 1 means allocation of RBG corresponding to the bit.

In step S1403, the terminal applies the first RBG size to the consecutive 0 bits in the front or rear end. Each bit of the bitmap is set to 1 or 0, and one 0 bit or consecutive 0 bits may be included in the front or rear end. At least one consecutive 0 bit in the front or rear end means non-allocation of at least one corresponding RBG. At this time, the terminal interprets non-allocation of RBs of the first RBG size are unallocated for each 0 bit.

In step S1405, the terminal applies the second RBG size to the remaining bits. The second RBG size is applied to the remaining bits except for at least one 0 bit to which the first RBG size is applied, in step S1403. That is, two different RBG sizes may be applied to the bits included in one bitmap. For example, the second RBG size may be defined or set to be smaller than the first RBG size.

- Embodiment #1-6: In RA type 0, the RBG size for 1 and the RBG size for 0 in the bits of FDRA may be set differently.

For uplink, 1's may be arranged continuously. For downlink, 1's may be arranged discontinuously. In this case, 0(s) indicate how far apart it is from the PRB, and 1 indicates an actual valid RGB index. According to the embodiments described above, the RBG size of the RBG index expressed as 1 is set to be smaller than the value defined in [Table 5]. In this case, since the number of 1's is not always constant in PxSCH scheduling, the number of bits of FDRA may vary depending on the situation. This may cause a problem in decoding the corresponding PDCCH of DCI. Therefore, if the number of bits of FDRA is likely to be variable, the number of bits of FDRA may be fixed to a certain M value.

(1-6-1) For RBG corresponding to a bit with a value of 0 of FDRA, RBG size may be directly indicated by the base station, or a scale value multiplied by the existing RBG size may be indicated. For example, the scale value may be predefined as fixed 2.

(1-6-2) For RBG corresponding to a bit with a value of 1 of FDRA, RBG size may be directly indicated by the base station, or a scale value multiplied by the existing RBG size may be indicated. For example, if the result of multiplying the scale value is 1, the RBG size is set to 2. For example, the scale value may be predefined as 1/2.

(1-6-3) In (1-6-1) and (1-6-2) described above, MAC CE, DCI, RRC higher layer signaling, etc. may be used to indicate the RBG size.

(1-6-4) The maximum number of bits available in the DCI field of FDRA is set to M, and M bits in the DCI may always be used as the FDRA field.

(1-6-4-1) M may be signaled in the higher layer. Alternatively, M may be predefined as twice the number of bits before the RBG size is reduced.

(1-6-4-2) When allocating resources using FDRA, if there are remaining bit(s), the remaining bit(s) may be filled with 0.

(1-6-4-3) When allocating resources using FDRA, if there are not enough bits, allocation may be made for each bit by RBG index ranking, and the rest may be processed as not being allocated.

(1-6-4-4) The first RBG and the number of RBs included in the corresponding RBG may be less than the changed size. In this case, the number of RBs of the corresponding RBG may vary depending on whether the bit value of the RBG index is 0 or 1.

(1-6-4-5) The M value may be determined based on the number of REGs before changing the RBG without being signaled from the higher layer. For example, if the original RBG size is 4 RBs, the number of REGs and the number of bits may be determined based on 4. At this time, if the number of bits is 10, M may be determined to be 10.

(1-6-5) It may be defined that Embodiment #1-6 is applicable only when the RBG size is greater than or equal to a specific P or a specific K1/K2. For example, when the RBG size is 16 in 15-KHz SCS, or when the RBG size is 3 in 30-KHz SCS, Embodiment #1-6 may be applied.

- Embodiment #1-7: For FDRA, a concept such as PxSCH-BWP or RB subset may be introduced to enable configuration of a new bitmap for PxSCH other than the existing BWP unit. The starting RB start position and band size for PxSCH may be statically set in a higher layer or may be dynamically indicated advance in DCI.

Embodiment #2: For the RIV method of RA type 1, limitations different from the existing ones may be set, or at least some of the embodiments related to RA type 1 described above may be applied.

As described above, the RIV method expresses a specific value determined by using the start index of the RB and the number of RBs. At this time, it is necessary to set it so as not to exceed the maximum 5-MHz band size or bandwidth of PxSCH. In this case, when generating the FDRA based on the maximum 20-MHz BWP, the start RB in the 5-MHz range of PxSCH is the start RB of the RIV, not the start RB of the BWP, and the maximum 5-MHz band size and bandwidth from the start RB may be indicated.

- Embodiment #2-1: For PDSCH, similar to PUSCH, interleaved VRB-to-PRB mapping may not be applied.

(2-1-1) When applying interleaved VRB-to-PRB mapping, RBs are divided into multiple groups by the interleaving operation, and the groups are distributed in the frequency domain. For example, referring to FIG. 9, a situation may occur where RBs or RB bundles #12, #13, and #14 is out of the maximum 5-MHz range. By excluding interleaved VRB-to-PRB mapping, the effect of preventing this phenomenon can be obtained.

(2-1-2) Under certain conditions, interleaved VRB-to-PRB mapping may be excluded. For example, if interleaved VRB-to-PRB mapping is applied, when the allocated PRBs exceed a bandwidth of 5 MHz, even if it is set at the base station, the terminal may not apply interleaved VRB-to-PRB mapping.

-Embodiment #2-2: When applying interleaved VRB-to-PRB mapping, if a situation occurs where RBs or RB bundles #12, #13, #14 as exemplified above are out of the maximum 5-MHz range, various methods may be considered for how to process resource mapping for the RBs or RB bundles.

(2-2-1) The base station or terminal may determine a TB size by considering in advance the number of RBs or RB bundles that are out of the corresponding range, and perform rate matching so that physical resources are not allocated to the corresponding RBs.

(2-2-2) The base station or terminal may allocate physical resources to RBs that are out of the corresponding range and puncture the corresponding part during transmission. At this time, since there may be performance degradation, frequency hopping may be applied to the downlink.

(2-2-3) Whether to perform rate matching or puncturing may be statically preset in the higher layer or may be dynamically indicated by DCI.

(2-2-4) The valid range of RIV is from the start PRB to the number of RBs set in the higher layer, which is 5 MHz or less, and the maximum value of the number of RBs may be signaled from the base station or based on a predefined value. The maximum value of the number of RBs may be a multiple of the PRB bundle size.

(2-2-5) When RBs are out of the 5-MHz bandwidth due to interleaved VRB-To-PRB mapping, whether to apply interleaved VRB-To-PRB mapping, whether to perform puncturing or rate matching, may be set or predefined in a higher layer. Alternatively, the related setting may be indicated in real time according to the situation through a specific bit of DCI.

(2-2-6) The bandwidth size for PxSCH transmission may be defined to be only a multiple of the PRB bundle size.

- Embodiment #2-3: For FDRA, a concept such as PxSCH-BWP or RB subset may be introduced to enable configuration of a new bitmap or RIV for PxSCH other than the existing BWP unit. The starting RB start position and band size for PxSCH may be statically set in a higher layer or dynamically indicated in advance in DCI.
- Embodiment #2-4: It is possible to include the offset described in the proposals of Embodiment #1-4 described above in the FDRA and inform it.
- Embodiment #2-5: For eRedcap terminals, only the RIV method of RA type 1 may be applied to both the downlink and the uplink, or the RIV method of RA type 1 may be applied to only one of the downlink or the uplink. The application target of the RIV method may be set in the higher layer, which can increase flexibility.

Embodiment #3: When frequency hopping is applied, RB start is newly applied.

In general, frequency hopping is applied when interleaving is not performed in RIV of RA type 1 in uplink. The standard definition of frequency hopping is as follows [Table 8].

[Table 8]

---

In case of intra-slot frequency hopping, the starting RB in each hop is given by:

$$RB_{start} = \begin{cases} RB_{start} & i = 0 \\ (RB_{start} + RB_{offset}) \bmod N_{BWP}^{size} & i = 1 \end{cases},$$

where $i=0$ and $i=1$ are the first hop and the second hop respectively, and $RB_{start}$ is the starting RB within the UL BWP, as calculated from the resource block assignment information of resource allocation type 1 (described in Clause 6.1.2.2.2) or as calculated from the resource assignment for MsgA PUSCH (described in [6, TS 38.213]) and RB $_{offset}$ is the frequency offset in RBs between the two frequency hops. The number of symbols in the first hop is given by $\left\lfloor N_{symb}^{PUSCH,s}/2 \right\rfloor$ , the num ber of symbols in the second hop is given by

$N_{symb}^{PUSCH,s} - \left\lfloor N_{symb}^{PUSCH,s}/2 \right\rfloor$ , where $N_{symb}^{PUSCH,s}$ is the length of the P USCH transmission in OFDM symbols in one slot.

In case of inter-slot frequency hopping and when *PUSCH-DMRS-Bundling* is not enabled, or for inter-slot frequency hopping for a PUSCH scheduled by RAR UL grant or DCI format 0_0 with CRC scrambled by TC-RNTI, the starting RB during slot $n_s^\mu$ is given by:

$$RB_{start}\left(n_s^\mu\right) = \begin{cases} RB_{start} & n_s^\mu \bmod 2 = 0 \\ (RB_{start} + RB_{offset}) \bmod N_{BWP}^{size} & n_s^\mu \bmod 2 = 1 \end{cases},$$

where $n_s^\mu$ is the current slot number within a system radio frame, where a multi-slot PUSCH transmission can ta ke place, $RB_{start}$ is the starting RB within the UL BWP, as calculated from the resource block assignment informa tion of resource allocation type 1 (described in Clause 6.1.2.2.2) and RB $_{offset}$ is the frequency offset in RBs betw een the two frequency hops.

---

- Embodiment #3-1: When interleaved VRB-to-PRB mapping is not applied for transmission of PDSCH within the 5-MHz range in downlink, frequency hopping may be applied. Application of frequency hopping may be set using a higher layer such as RRC or DCI.
- Embodiment #3-2: In the case where a range such as a special BWP is applied in advance in the maximum 5-MHz band size or bandwidth for PUSCH, the RB start used to determine RIV within UL BWP may be determined as follows, unlike the existing definition.

(3-2-1) The first RB of the maximum band size for PUSCH is determined as the RB start. That is, hopping may be considered for the entire PUSCH-BWP or RB subset.

(3-2-2) Frequency hopping is applied as before only within the range of the corresponding PxSCH-BWP or RB subset. At this time, the value of FDRA may be set based on the range for the corresponding PxSCH-BWP or RB subset, not the existing UL BWP.

Embodiment #4: FDRA Optimization Allocation Method in RIV Method

Unlike the bitmap method used in RA Type 0, the RIV method of RA Type 1 is divided into two methods. One method is the DCI X_1 or X_0 method that calculates RIV in units of one RB. The contents related to RIV extracted from TS 38.214 are as follows [Table 9].

[Table 9]

A downlink type 1 resource allocation field consists of a resource indication value (*RIV*) corresponding to a starting virtual resource block ($RB_{start}$) and a length in terms of contiguously allocated resource blocks $L_{RBs}$. The resource indication value is defined by

$$(L_{RBs} - 1) \leq \left\lfloor N_{BWP}^{size} / 2 \right\rfloor$$
if     then
$$RIV = N_{BWP}^{size} (L_{RBs} - 1) + RB_{start}$$

else

$$RIV = N_{BWP}^{size} (N_{BWP}^{size} - L_{RBs} + 1) + (N_{BWP}^{size} - 1 - RB_{start})$$

where $L_{RBs} \geq 1$ and shall not exceed $N_{BWP}^{size} - RB_{start}$.

In the present method, a variable LRBs representing the RB size may be used. Therefore, in the present method, scheduling may be performed so as not to exceed the number of PRBs, which is the maximum scheduled transmission BW (e.g., 5 MHz PRBs). However, in another method, when REGs are determined using 2, 4, 8, or 16 RBs using K1/K2 of DCI X_2 and RIV is determined, a problem may occur in large RBGs. Therefore, the present disclosure proposes the following embodiments.

#Embodiment 4-1: When K1/K2 is 16, the base station or terminal may interpret K1/K2 as 8 and process RIV.

#Embodiment 4-2: A new RRC parameter of K1'/K2' with a new 1 included in K1/K2 may be defined. If it is allowed to determine RIV in units of 1 RB in DCI 2_X, even the maximum scheduled transmission bandwidth (e.g., 5 MHz PREs) in the case of an odd number may be processed accurately without waste.

#Embodiment 4-3: In the case of the bitmap method, since there is an issue in accurately using the number of RBs of the maximum scheduled transmission bandwidth (e.g., 5 MHz PRBs), the use may be limited to only RA type 1 of DCI X_1 or DCI X_0. In this case, even if an additional bit of FDRA is included in the DCI field for dynamic indication of the RA type, the additional bit may not be used. Specifically, the bit indicating the dynamic RA type may be removed, fixed to a specific value, or the terminal may not refer to the bit.

Embodiment #5: Interlaced uplink transmission method in an unlicensed band may be applied based on 5 MHz rather than 20 MHz.

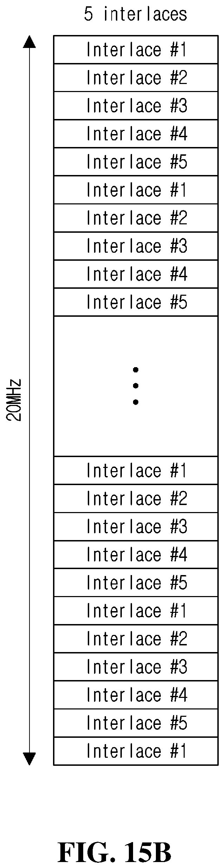

The interlaced uplink transmission method is as shown in FIG. 15a and FIG. 15b. FIG. 15a and FIG. 15b illustrate examples of interlaced transmission applicable to the present disclosure. As shown in FIG. 15, according to the interlaced uplink transmission scheme, RBs are distributed at intervals of 10 RBs or other specific intervals based on a 20-MHz LBT (listen before talk) channel sensing in an unlicensed band.

Interlaced transmission may be performed to satisfy the PSD (power spectral density) specification in the OFDMA scheme. That is, by allocating as many RBs as multiples of a specific RB unit, unlike the aforementioned bitmap method or RIV method, the RBs are distributed over a frequency domain of 20 MHz at regular intervals of 1 RB each. In this case, if a PUSCH is transmitted in a limited bandwidth of 5 MHz, additional limitations may be required. According to various embodiments of the present disclosure, various methods may be applied. In this case, when applying the interlaced transmission based on 20 MHz to a situation where only a PxSCH is transmitted based on 5 MHz, it is important how the interlaced transmission is performed in a maximum 5-MHz band.

- Embodiment #5-1: In order to designate 5 MHz in a 20-MHz unlicensed band, it is possible to divide the 20-MHz band into four equal parts, thereby dividing it into four 5-MHz bands, and to indicate one of the four 5-MHz bands with 2-bit information. It may be set through DCI, MAC CE, or higher layer signaling. Through this, the base station may indicate a 5-MHz band of the entire 20-MHz band to the terminal, and the terminal may perform LBT in the designated 5-MHz band.

- Embodiment #5-2: Referring to FIG. 15b, there are five interlaces such as 1 to 5. By the five interlaces, a unit bundle of five RBs is defined, with one RB per interlace. When M bundles are defined, the bundles may be indexed as 0, 1, 2, 3, .... At this time, if the start interlace 0 is determined as the start PRB and at least one RB is arranged at an interval of 5 MHz, the PRBs included in the corresponding range may be used as a contiguous set of valid PRBs for PxSCH transmission. Thereafter, how to process actual data for the valid RBs in terms of channel coding may be distinguished according to rate matching or puncturing.

- Embodiment #5-3: Although RBs of PUSCH are arranged over 20 MHz, rate matching may be performed based on the TB size corresponding to the number of RBs within the range of actual 5-MHz transmission. And, only RBs within the actual range may be used for transmission.

- Embodiment #5-4: Which 5-MHz band to use within the 20-MHz band secured through LBT is set in advance in DCI or a higher layer, and RBs may be interlaced and allocated at specific intervals in the 5-MHz band thereafter. The methods of Embodiments #5-1 and #5-2 described above may be applied to uplink channels such as PRACH and SRS, not to the PxSCH channel.

Embodiment #6: Other various proposals

- Embodiment #6-1: When only PDSCH and PUSCH are limited to a maximum of 5 MHz in bandwidth size, the aforementioned transmission methods may be applied adaptively using RNTI (e.g., depending on the type of PDDCH of a specific SSS).

(6-1-1) The limitation of the maximum 5-MHz PxSCH may be applied only to C-RNTI.

(6-1-2) The aforementioned transmission methods may be applied to all RNTIs set to PxSCH.

(6-1-3) The FDRA of a specific RNTI (e.g. SI-RNTI) shall be allocated only within a predefined frequency domain or a specific frequency range, not DCI.

- Embodiment #6-2: When transmitting MSG3 of a random access procedure, (6-1-2) may be applied to the field of FDRA of uplink RAR, which is MSG2.
- Embodiment #6-3: For shared channels (e.g., PxSCH), the application of a maximum 5-MHz band size and bandwidth may be dynamically indicated by DCI.
- Embodiment #6-4: The maximum transmission bandwidth size of a shared channel may be preset in a higher layer according to RNTI.
- Embodiment #6-5: In the case of a method of setting an offset to a maximum of 5 MHz based on a starting point for PxSCH, if the BWP of downlink or uplink exceeds 5 MHz, the maximum continuous RB range of PxSCH may be limited to 5 MHz. In other words, the transmission bandwidth of PxSCH may be fixed to a maximum of 5 MHz.
- Embodiment #6-6: When the size of BWP is 5 MHz or less, the maximum transmission BWP of PxSCH may be determined according to the corresponding BWP. For example, the transmission range of PxSCH may always be set to be equal to the BWP size.
- Embodiment #6-7: When PxSCH-BWP is determined and PxSCH is operated within the existing BWP, the size of PxSCH-BWP is less than or equal to the existing BWP, but cannot exceed 5 MHz.
- Embodiment #6-8: As shown in [Table 7], the number of RBs per channel bandwidth is defined according to SCS in TS 38.101-1 of RAN4. However, the maximum number of transmission RBs of PxSCH having a maximum of 5 MHz may be defined as a new value higher than the value defined in [Table 7] or may be preset in a higher layer. In this case, the range where actual transmission is possible may be understood as the concept of the 'Max RB' number set in a higher layer.
- Embodiment #6-9: The present disclosure describes the concept of RB start or the first application of RBG. This mainly relates to how to arrange RB start in the frequency domain. Precoding is performed in bundle or group units, and when the concept of sub-BWP or PxSCH-BWP is introduced for PxSCH, a new PRG may be configured by applying Sub-BWP or PxSCH-BWP instead of the existing BWP when configuring a PRG.

If precoding of PxSCH for a specific band size less than 5 MHz is performed, in the size of PRG, instead of {2, 4, wideband}, a new array index may also be added specifically for a narrow band, such as {1, 2, wideband}.

- Embodiment #6-10: Whether to perform puncturing or rate matching when the aforementioned RB resource exceeds the number of valid RBs of a specific PxSCH (e.g., the number corresponding to the maximum 5-MHz band size) may be predefined per RNTI or may be set per RNTI in RRC.
- Embodiment #6-11: In the case where the allocation of PxSCH is limited to have a bandwidth of 5 MHz or less, with respect to the interpretation of FDRA, the start position of RB may be set differently in a slot including a CORESET for PDCCH and a slot not including a CORESET. In particular, in case of PDSCH of USS, for buffering saving for post-FFT, the bandwidth of PxSCH is set within the number of PRBs corresponding to 5 MHz, either continuously or discontinuously.

(6-11-1) If a corresponding slot includes a CORESET and the CORESET includes a PDCCH related to USS-based unicast, the start PRB of the FDRA of the unicast-related PxSCH of the corresponding slot may be interpreted as follows:

(6-11-1-1) The start PRB of the CORESET may be interpreted as the start PRB.

(6-11-1-2) Whether the start PRB of the corresponding CORESET is interpreted as the start PRB may be preset or predefined in RRC. If the corresponding RRC parameter is omitted, whether the CORESET PRB is the start PRB or the active BWP is interpreted as the start PRB may be defined as a default setting.

(6-11-2) If the corresponding slot includes a CORESET and the CORESET does not include a PDCCH related to USS-based unicast, the start PRB of the FDRA of the unicast-related PxSCH of the corresponding slot may be interpreted as follows:

(6-11-2-1) The start PRB of the corresponding CORESET may be interpreted as the start PRB.

(6-11-2-2) Whether the start PRB of the corresponding CORESET is interpreted as the start PRB may be preset or predefined in RRC. If the corresponding RRC parameter is omitted, whether the CORESET PRB is the start PRB or the active BWP is the start PRB may be defined as a default setting.

(6-11-3) If the corresponding slot does not include a CORESET and only includes a PxSCH, whether to determine the start PRB of the BWP as the start PRB or to set a specific offset in RRC and determine the start PRB based on the set offset may be signaled using an RRC parameter. In this case, if the corresponding parameter is omitted, the offset may be interpreted as 0.

(6-11-4) Even if the slot does not include a CORESET, for the unicast PxSCH, the start PRB of the CORESET position including the USS can be interpreted as the start PRB of the corresponding FDRA.

(6-11-5) For PxSCH scheduled with DCI, it may be indicated whether the starting PRB position of FDRA is determined as the start of active BWP or the start PRB of CORESET. If the corresponding field is not set in the higher layer, a default setting for whether it is the start of active BWP or the start of CORESET may be defined.

Compared to general devices that must support up to 100 MHz in 5G, the Redcap device of Release 17 has a maximum bandwidth of 20 MHz. The Redcap device was introduced as a technology that is simple in terms of parts and operation and can save a lot of cost. The present disclosure proposes a technology that can additionally reduce costs in terms of buffer size or memory without making a significant change to the Redcap technology. In general, memory or buffer size, etc. depend more on user specific information of shared channels than on control channels. Therefore, in the present disclosure, the HW platform structure applied in Release 17 is reused by limiting the bandwidth of PxSCH to a maximum of 5 MHz instead of a maximum of 20 MHz that is the system or channel bandwidth, and cost reduction of some memories may be considered. Of course, limiting all channels to 5 MHz and reducing the overall HW platform structure to 5 MHz will reduce the initial manufacturing cost compared to 20-MHz RFIC or BB (baseband) parts, but since 20-MHz BB platforms and RIFCs are currently highly active, reuse is more desirable. In other words, reducing the memory size while considering a certain degree of reuse will provide a better improvement, considering the costs required for IOT (interoperability Test), IoDT (interoperability development test), etc. Accordingly, the present disclosure can minimize changes compared to the existing ones, shorten the development period, and save some costs by simply imposing a bandwidth limitation of about 5 MHz only on shared channels through the various embodiments described above. Therefore, the proposed technology is expected to be utilized in efficient wearables or private factory devices.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

   receiving configuration information related to resource allocation;
   receiving control information related to the resource allocation;
   identifying allocated resources based on at least one of the configuration information or the control information; and
   transmitting or receiving a signal through the resources,
   wherein the resources are identified based on at least one table defining a plurality of resource block group (RBG) sizes per bandwidth part (BWP) size, and
   wherein each of the plurality of BWP sizes corresponds to at least one RBG size value for allocation of a relatively wide bandwidth and at least one RBG size value for allocation of a relatively narrow bandwidth.

2. The method of clam 1, wherein the at least one RBG size value for allocation of the relatively narrow bandwidth is predefined.

3. The method of claim 1, wherein at least one BWP size of the plurality of BWP sizes correspond to three or more RBG sizes having a multiple relationship with each other.

4. The method of claim 1, wherein the at least one RBG size value for allocation of the relatively narrow bandwidth is determined by multiplying the RBG size value for allocation of the wide bandwidth by a weight.

5. The method of claim 4, further comprising receiving information related to the weight from a base station.

6. The method of claim 4, wherein the weight is a predefined value and includes 2 or 4.

7. The method of claim 1, wherein the transmitting or receiving the signal through the resources comprises performing puncturing or rate matching on the at least one RB, based on allocation of at least one RB outside a range of available RBs in the narrow bandwidth.

8. The method of claim 7, further comprising receiving configuration information or parameters related to the puncturing or the rate matching.

9. The method of claim 7, wherein the performing the puncturing or the rate matching comprises:

   processing a signal by considering the puncturing for a channel for broadcast; and
   processing a signal by considering the rate matching for a channel for unicast.

10. The method of claim 1,
    wherein the identifying the allocated resources comprises:

    determining a first bit set and a second bit set, for bits included in a bitmap indicating allocation per RBG included in the control information;
    applying a first RBG size to at least one RBG corresponding to bits belonging to the first bit set;
    applying a second RBG size to at least one RBG corresponding to bits belonging to the second bit set, and
    wherein the second RBG size is smaller than the first RBG size.

11. The method of claim 10, wherein the first bit set includes at least one consecutive 0 bit in a front or rear end of the bitmap.

12. A terminal in a wireless communication system, the terminal comprising:

    a transceiver; and
    a processor coupled to the transceiver,

wherein the processor is configured to:

receive configuration information related to resource allocation;
receive control information related to the resource allocation;
identify allocated resources based on at least one of the configuration information or the control information; and
transmit or receive a signal through the resources,
wherein the resources are identified based on at least one table defining a plurality of resource block group (RBG) sizes per bandwidth part (BWP) size, and
wherein each of the plurality of BWP sizes corresponds to at least one RBG size value for allocation of a relatively wide bandwidth and at least one RBG size value for allocation of a relatively narrow bandwidth.

13. A communication device comprising:

at least one processor; and
at least one computer memory connected to the at least one processor and configured to store instructions that direct operations as executed by the at least one processor,
wherein the operations comprise:

receiving configuration information related to resource allocation;
receiving control information related to the resource allocation;
identifying allocated resources based on at least one of the configuration information or the control information; and
transmitting or receiving a signal through the resources,
wherein the resources are identified based on at least one table defining a plurality of resource block group (RBG) size per bandwidth part (BWP) size, and
wherein each of the plurality of BWP sizes corresponds to at least one RBG size value for allocation of a relatively wide bandwidth and at least one RBG size value for allocation of a relatively narrow bandwidth.

14. A non-transitory computer-readable medium storing at least one instructions, the non-transitory computer-readable medium comprising the at least one instructions executable by a processor,
wherein the at least one instruction controls a device to:

receive configuration information related to resource allocation;
receive control information related to the resource allocation;
identify allocated resources based on at least one of the configuration information or the control information; and
transmit or receive a signal through the resources,
wherein the resources are identified based on at least one table defining a plurality of resource block group (RBG) sizes per bandwidth part (BWP) size, and
wherein each of the plurality of BWP sizes corresponds to at least one RBG size value for allocation of a relatively wide bandwidth and at least one RBG size value for allocation of a relatively narrow bandwidth.

**FIG. 1**

**FIG. 2**

Radio Frame 10ms

Subframe 1ms

| 0 | 1 | 2 | 3 | 4 | 5 | 6 | 7 | 8 | 9 |

Fixed Size

Subframe={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbol

**FIG. 3**

**FIG. 4**

**FIG. 5**

Resource grid

A carrier
(up to 3300 subcarriers, i.e, 275 RBs)

A BWP

1 RB=12 subcarrier

1 RE

1 subcarrier

1 symbol

l=0 • • •

k=0

**FIG. 6**

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S701    S702    S703    S704    S705    S706    S707    S708

- DL/UL ACK/NACK
- UE CQI/PMI RI REPORT USING PUSCH AND PUCCH

**FIG. 7**

EP 4 598 184 A1

| Bandwidth part i, $N_{BWP,i}^{size}=20$ | | | | |
|---|---|---|---|---|
| $n_{CRB}=n_{PRB}+N_{BWP,i}^{start}$ | $n_{PRB}(N_{BWP,i}^{start}=4)$ | Config 2 (P=4) | $n_{PRB}(N_{BWP,i}^{start}=5)$ | Config 2 (P=4) |
| 0 | | | | |
| 1 | | | | |
| 2 | | | | |
| 3 | | | | |
| 4 | 0 | | | |
| 5 | 1 | RBG 00 | 0 | |
| 6 | 2 | | 1 | RBG 00 |
| 7 | 3 | | 2 | |
| 8 | 4 | | 3 | |
| 9 | 5 | RBG 01 | 4 | RBG 01 |
| 10 | 6 | | 5 | |
| 11 | 7 | | 6 | |
| 12 | 8 | | 7 | |
| 13 | 9 | RBG 02 | 8 | RBG 02 |
| 14 | 10 | | 9 | |
| 15 | 11 | | 10 | |
| 16 | 12 | | 11 | |
| 17 | 13 | RBG 03 | 12 | RBG 03 |
| 18 | 14 | | 13 | |
| 19 | 15 | | 14 | |
| 20 | 16 | | 15 | |
| 21 | 17 | RBG 04 | 16 | RBG 04 |
| 22 | 18 | | 17 | |
| 23 | 19 | | 18 | |
| 24 | | | 19 | RBG 04 |

**FIG. 8**

VRB allocation  PRB allocation

FIG. 9

**FIG. 10**

START

RECEIVE CONFIGURATION INFORMATION
RELATED TO RESOURCE ALLOCATION
S1101

RECEIVE CONTROL INFORMATION
RELATED TO RESOURCE ALLOCATION
S1103

IDENTIFY ALLOCATED RESOURCES
BASED ON CONFIGURATION INFORMATION
AND CONTROL INFORMATION
S1105

TRANSMIT OR RECEIVE DATA
THROUGH ALLOCATED RESOURCES
S1107

END

# FIG. 11

START

S1201

IDENTIFY RGB SIZE INFORMATION
FOR RESOURCE ALLOCATION
FOR FIRST TYPE CHANNEL

S1203

IDENTIFY WEIGHT OF RGB SIZE
FOR RESOURCE ALLOCATION
FOR SECOND TYPE CHANNEL

S1205

RECEIVE RESOURCE ALLOCATION
INFORMATION OF SECOND TYPE CHANNEL

S1207

TRANSMIT OR RECEIVE SIGNAL
THROUGH SECOND TYPE CHANNEL
BASED ON WEIGHT AND RBG SIZE

END

**FIG. 12**

START

S1301

RECEIVE RESOURCE ALLOCATION
INFORMATION FOR CHANNEL

S1303

IDENTIFY THAT PART OF ALLOCATED
RBS ARE LOCATED OUTSIDE RANGE
OF AVAILABLE WITHIN BANDWIDTH

S1305

PERFORM PUNCTURING OR RATE
MATCHING BY CONSIDERING RBS LOCATED
OUTSIDE RANGE OF AVAILABLE RBS

END

**FIG. 13**

```
        ┌─────────────┐
        │    START    │
        └─────────────┘
               │
               │            S1401
               ▼
┌──────────────────────────────┐
│   RECEIVE BITMAP INFORMATION  │
│    FOR ALLOCATING FREQUENCY   │
│     RESOURCES OF CHANNEL      │
└──────────────────────────────┘
               │
               │            S1403
               ▼
┌──────────────────────────────┐
│    APPLY FIRST RBG SIZE TO    │
│     CONSECUTIVE 0 BITS IN     │
│     FRONT END OR REAR END     │
└──────────────────────────────┘
               │
               │            S1405
               ▼
┌──────────────────────────────┐
│    APPLY SECOND RBG SIZE      │
│     TO REMAINING BITS         │
└──────────────────────────────┘
               │
               ▼
        ┌─────────────┐
        │     END     │
        └─────────────┘
```

# FIG. 14

5 interlaces

| |
|---|
| Interlace #1 |
| Interlace #2 |
| Interlace #3 |
| Interlace #4 |
| Interlace #5 |
| Interlace #1 |
| Interlace #2 |
| Interlace #3 |
| Interlace #4 |
| Interlace #5 |
| ⋮ |
| Interlace #1 |
| Interlace #2 |
| Interlace #3 |
| Interlace #4 |
| Interlace #5 |
| Interlace #1 |
| Interlace #2 |
| Interlace #3 |
| Interlace #4 |
| Interlace #5 |
| Interlace #1 |

20MHz

**FIG. 15B**

## INTERNATIONAL SEARCH REPORT

| International application No. |
| --- |
| **PCT/KR2023/014870** |

**A.    CLASSIFICATION OF SUBJECT MATTER**

**H04W 72/04**(2009.01)i; **H04W 72/53**(2023.01)i; **H04W 72/232**(2023.01)i; **H04L 5/00**(2006.01)i; **H04W 72/0457**(2023.01)i

According to International Patent Classification (IPC) or to both national classification and IPC

**B.    FIELDS SEARCHED**

Minimum documentation searched (classification system followed by classification symbols)

H04W 72/04(2009.01); H04L 27/26(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: resource allocation, control information, configuration information, BWP size, RBG size, table, large bandwidth, small bandwidth, 가중치(weight), 천공(puncturing), 레이트 매칭(rate matching), broadcast, unicast, bitmap

**C.    DOCUMENTS CONSIDERED TO BE RELEVANT**

| Category* | Citation of document, with indication, where appropriate, of the relevant passages | Relevant to claim No. |
| --- | --- | --- |
| X<br><br>A | WO 2018-232284 A1 (CHATTERJEE, Debdeep et al.) 20 December 2018 (2018-12-20)<br>    See paragraphs [0099]-[0121]; and claims 1-2 and 10. | 1-6,10-14<br><br>7-9 |
| X | KR 10-1954433 B1 (LG ELECTRONICS INC.) 05 March 2019 (2019-03-05)<br>    See paragraphs [0165]-[0244]; and figures 10-13. | 1-3,12-14 |
| X | EP 3890259 A1 (HUAWEI TECHNOLOGIES CO., LTD.) 06 October 2021 (2021-10-06)<br>    See paragraphs [0016]-[0180]. | 1-3,12-14 |
| A | US 2020-0351878 A1 (QUALCOMM INCORPORATED) 05 November 2020 (2020-11-05)<br>    See paragraphs [0158]-[0181]; and figures 3-5. | 1-14 |
| A | US 2020-0228282 A1 (LG ELECTRONICS INC.) 16 July 2020 (2020-07-16)<br>    See paragraphs [0204]-[0235]; and figures 11-13. | 1-14 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 January 2024** | **05 January 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014870**

| Patent document cited in search report | | | Publication date (day/month/year) | Patent family member(s) | | | Publication date (day/month/year) |
|---|---|---|---|---|---|---|---|
| WO | 2018-232284 | A1 | 20 December 2018 | CN | 111434165 | A | 17 July 2020 |
| | | | | DE | 112018000160 | T5 | 01 August 2019 |
| | | | | US | 2023-0139455 | A1 | 04 May 2023 |
| KR | 10-1954433 | B1 | 05 March 2019 | AU | 2018-350301 | A1 | 25 July 2019 |
| | | | | AU | 2018-350301 | B2 | 24 December 2020 |
| | | | | BR | 112018076661 | A2 | 10 September 2019 |
| | | | | BR | 112018076661 | B1 | 09 February 2021 |
| | | | | CA | 3040175 | A1 | 27 December 2019 |
| | | | | CA | 3040175 | C | 12 October 2021 |
| | | | | CL | 2019000949 | A1 | 05 June 2020 |
| | | | | CN | 110583071 | A | 17 December 2019 |
| | | | | CN | 110583071 | B | 03 January 2023 |
| | | | | CN | 116406010 | A | 07 July 2023 |
| | | | | EP | 3537810 | A1 | 11 September 2019 |
| | | | | EP | 3537810 | B1 | 24 March 2021 |
| | | | | EP | 3840510 | A1 | 23 June 2021 |
| | | | | EP | 3840510 | B1 | 17 November 2021 |
| | | | | EP | 3886520 | A1 | 29 September 2021 |
| | | | | EP | 3886520 | B1 | 23 February 2022 |
| | | | | JP | 2020-523943 | A | 06 August 2020 |
| | | | | JP | 6986102 | B2 | 22 December 2021 |
| | | | | MX | 2018015811 | A | 21 October 2019 |
| | | | | PH | 12019500760 | A1 | 11 November 2019 |
| | | | | RU | 2763149 | C1 | 27 December 2021 |
| | | | | SG | 11201810497 | A | 27 August 2019 |
| | | | | US | 10448388 | B2 | 15 October 2019 |
| | | | | US | 11219004 | B2 | 04 January 2022 |
| | | | | US | 11716743 | B2 | 01 August 2023 |
| | | | | US | 2019-0215807 | A1 | 11 July 2019 |
| | | | | US | 2019-0394760 | A1 | 26 December 2019 |
| | | | | US | 2022-0095288 | A1 | 24 March 2022 |
| | | | | WO | 2019-139207 | A1 | 18 July 2019 |
| EP | 3890259 | A1 | 06 October 2021 | AU | 2018-284887 | A1 | 16 January 2020 |
| | | | | AU | 2018-284887 | B2 | 25 March 2021 |
| | | | | BR | 112019026619 | A2 | 30 June 2020 |
| | | | | CN | 109150785 | A | 04 January 2019 |
| | | | | CN | 110460555 | A | 15 November 2019 |
| | | | | CN | 110460555 | B | 27 October 2020 |
| | | | | CN | 111052695 | A | 21 April 2020 |
| | | | | EP | 3547629 | A1 | 02 October 2019 |
| | | | | EP | 3547629 | B1 | 05 May 2021 |
| | | | | ES | 2882800 | T3 | 02 December 2021 |
| | | | | JP | 2020-523924 | A | 06 August 2020 |
| | | | | JP | 7028519 | B2 | 02 March 2022 |
| | | | | KR | 10-2020-0014423 | A | 10 February 2020 |
| | | | | KR | 10-2372581 | B1 | 10 March 2022 |
| | | | | RU | 2020100868 | A | 16 July 2021 |
| | | | | RU | 2020100868 | A3 | 20 October 2021 |
| | | | | RU | 2771351 | C2 | 04 May 2022 |
| | | | | US | 10742386 | B2 | 11 August 2020 |

Form PCT/ISA/210 (patent family annex) (July 2022)

**INTERNATIONAL SEARCH REPORT**
Information on patent family members

International application No.

**PCT/KR2023/014870**

| Patent document cited in search report | | | Publication date (day/month/year) | Patent family member(s) | | | Publication date (day/month/year) |
|---|---|---|---|---|---|---|---|
| | | | | US | 11329792 | B2 | 10 May 2022 |
| | | | | US | 11582013 | B2 | 14 February 2023 |
| | | | | US | 2019-0140807 | A1 | 09 May 2019 |
| | | | | US | 2020-0244427 | A1 | 30 July 2020 |
| | | | | US | 2022-0303101 | A1 | 22 September 2022 |
| | | | | WO | 2018-228565 | A1 | 20 December 2018 |
| US | 2020-0351878 | A1 | 05 November 2020 | CN | 113767591 | A | 07 December 2021 |
| | | | | EP | 3963812 | A1 | 09 March 2022 |
| | | | | EP | 3963812 | B1 | 25 October 2023 |
| | | | | US | 11066607 | B1 | 20 July 2021 |
| | | | | US | 11570777 | B2 | 31 January 2023 |
| | | | | US | 2023-0174875 | A1 | 08 June 2023 |
| | | | | WO | 2020-227006 | A1 | 12 November 2020 |
| | | | | WO | 2021-211690 | A1 | 21 October 2021 |
| US | 2020-0228282 | A1 | 16 July 2020 | US | 11251921 | B2 | 15 February 2022 |
| | | | | WO | 2019-017753 | A1 | 24 January 2019 |

Form PCT/ISA/210 (patent family annex) (July 2022)